# EUROPEAN PATENT APPLICATION

(11) **EP 2 677 837 A1**
(43) Date of publication of application: **25.12.2013**
(21) Application number: 12008620.2
(22) Date of filing: 27.12.2012
(51) Int. Cl.: H04W 88/18, G06F 13/38, H04W 12/06, H04W 80/02, H04W 84/12

(54) **Multi-Profile Application Framework**

(30) Priority: 22.06.2012 US 201213530287
(71) Applicant: Broadcom Corporation, Irvine, CA 92617 (US)
(72) Inventor: Aliyath, Joby, Bangalore (IN); Devulapalli, Amrit, 560102 Bangalore (IN); Ambrose, Abishek, 560034 Bangalore (IN); Ding, Shawn, San Diego, CA 92129 (US)
(74) Representative: Jehle, Volker Armin

(57) **Abstract**

Systems and methods are disclosed in which a controller enables communication between a Bluetooth®-wireless-protocol unaware host and a Bluetooth®-wireless-protocol enabled remote device. As such, one embodiment of the invention is a controller, which comprises a controller transport to enable communication of data with a Bluetooth®-wireless-protocol unaware host device. The controller further comprises a controller application and a controller Bluetooth® stack to enable communication of the data using Bluetooth® wireless protocol. One embodiment can be seen as a method comprising the steps of receiving data from a Bluetooth®-wireless-protocol unaware host, converting the received data to a Bluetooth® wireless protocol, and transmitting the converted data to a Bluetooth®-wireless-protocol enabled remote device.

## Description

### BACKGROUND

Data communication networks are becoming ubiquitous. As a result, many devices now come equipped with data-communication ports that allow those devices to transmit data to and receive data from other devices. Consequently, users are now seeking seamless data exchange between multiple devices.

### BRIEF SUMMARY OF THE INVENTION

According to an aspect, a data communication system comprises:
a Bluetooth®-wireless-protocol unaware host, comprising:
   a host application; and
   a host transport to communicate data, the host data being communicated in a non-Bluetooth® wireless protocol; and
a host controller interface (HCI) controller (HCIC), the HCIC comprising:
   a controller transport communicatively coupled to the host transport, the controller transport matching the host transport;
   a controller application to communicate with the host application through the controller transport;
   a multi-profile application framework (MPAF) to enable exchange of the data using Bluetooth® wireless protocol; and
   a Bluetooth® stack to enable communication of the data using the Bluetooth® wireless protocol.

Advantageously, the host transport is a Universal Serial Bus (USB) transport.

Advantageously, the host transport is a Universal Asynchronous Receiver/Transmitter (UART) transport.

Advantageously, the host transport is a Serial Peripheral Interface (SPI) transport.

Advantageously, the system further comprises:
a Bluetooth®-wireless-protocol enabled remote device, comprising:
   a remote Bluetooth® stack to enable data communication with the HCIC using the Bluetooth® wireless protocol; and
   a remote application.

Advantageously, the system further comprises:
a Bluetooth®-wireless-protocol enabled remote device, comprising:
   means for enabling data communication using the Bluetooth® wireless protocol; and
   a remote application.

According to an aspect, a controller comprises:
a controller application;
a controller transport to exchange data between the controller application and a Bluetooth®-wireless-protocol unaware host device;
a multi-profile application framework (MPAF) to convert the data to Bluetooth® wireless protocol; and
a controller Bluetooth® stack to exchange data between the controller and a Bluetooth®-wireless-protocol enabled remote device.

Advantageously, the controller transport comprises:
a Universal Serial Bus (USB) transport;
a Universal Asynchronous Receiver/Transmitter (UART) transport; and
a Serial Peripheral Interface (SPI) transport.

Advantageously, the Bluetooth® stack employs:
RFCOMM protocols;
Audio/Video Data Transport (AVDT) protocols; and
Logical Link Control and Adaptation Protocol (L2CAP).

Advantageously, the controller transport is a Universal Serial Bus (USB) transport.

Advantageously, the controller transport is a Universal Asynchronous Receiver/Transmitter (UART) transport.

Advantageously, the controller transport is a Serial Peripheral Interface (SPI) transport.

Advantageously, the controller application comprises:
a Universal Serial Bus (USB) Human Interface Device (HID) Emulation (UHE) application;
a 3DG application;
a Serial Port Profile (SPP) application;
a Remote Control (RC) application; and
an Advanced Audio Distribution (A2DP) application.

Advantageously, the Bluetooth® stack employs RFCOMM protocols.

Advantageously, the Bluetooth® stack employs Audio/Video Data Transport (AVDT) protocols.

Advantageously, the Bluetooth® stack employs Logical Link Control and Adaptation Protocol (L2CAP).

According to an aspect, a communication method comprises:
receiving data from a Bluetooth®-wireless-protocol unaware host;
converting the received data to a Bluetooth® wireless protocol; and
transmitting the converted data to a Bluetooth®-wireless-protocol enabled remote device.

Advantageously, the step of receiving data comprises:
receiving data over a host transport, the host transport being one selected from the group consisting of:
   a Universal Serial Bus (USB) transport;
   a Universal Asynchronous Receiver/Transmitter (UART) transport; and
   a Serial Peripheral Interface (SPI) transport.

Advantageously, the method further comprises:
executing a controller application.

Advantageously, the step of executing the controller application comprises a step selected from the group consisting of:
executing a Universal Serial Bus (USB) Human Interface Device (HID) Emulation (UHE) application;
executing a 3DG application;
executing a Serial Port Profile (SPP) application;
executing a Remote Control (RC) application; and
executing an Advanced Audio Distribution (A2DP) application.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.

FIG. 1 is a block diagram of an example system that allows communication between a Bluetooth®-wireless-protocol unaware host device and a Bluetooth®-wireless-protocol enabled remote device.

FIG.2 is a block diagram showing, in greater detail, examples of components of the controller of FIG. 1.

FIGS. 3A and 3B are diagrams showing example data formats for use by the controller of FIG. 2.

FIG. 4 is a diagram showing an example data header format for use by the controller of FIG. 2.

FIGS. 5A through 5C are data flow diagrams showing communication between a Bluetooth®-wireless-protocol unaware host, a controller, and a Bluetooth®-wireless-protocol enabled remote device.

### DETAILED DESCRIPTION OF THE EMBODIMENTS

As data communication networks become prevalent, many devices are coming equipped with data-communication ports that allow these devices to communicate with other devices. Consequently, users are now seeking seamless data exchange between multiple devices. Unfortunately, not all of the currently-existing devices are compatible with other currently-existing devices, and sometimes it becomes difficult to transmit data from one device to another due to such an incompatibility. Additionally, in order to ameliorate clutter that results from the connection of multiple wired peripherals, users are more-frequently seeking wireless data solutions for data transmission, such as the Bluetooth® wireless protocol.

In the past, one way in which this problem has been addressed was by using Universal Serial Bus (USB) Human Interface Device (HID) Emulation (UHE) (also referred to as "Legacy-UHE"). Legacy-UHE provided a single application that interfaced with a host using a standard USB-HID device, while emulating a remote HID device (*e.g.*, mouse, keyboard, other peripheral device, *etc*.). The Legacy-UHE targeted only HID-profile-based applications, and implementation of the Legacy-UHE was tied to USB ports. Furthermore, the Legacy-UHE did not support coexistence of multiple profile-based applications.

In order to ameliorate this limitation, the various embodiments described herein include a controller that enables communication between a Bluetooth®-wireless-protocol unaware host and a Bluetooth®-wireless-protocol enabled remote device. As such, one embodiment of the invention is a controller, which comprises a transport (*e.g.*, USB transport, Universal Asynchronous Receiver/Transmitter (UART) transport, *etc*.) to enable communication of data with a Bluetooth®-wireless-protocol unaware host device. The controller further comprises a controller application and a controller Bluetooth® stack that enables communication of the data using Bluetooth® wireless protocol. In some embodiments, the controller receives data from a Bluetooth®-wireless-protocol unaware host, converts the received data to be compatible with Bluetooth® wireless protocol, and then transmits the converted data to a Bluetooth®-wireless-protocol enabled remote device. By providing a bridge between a Bluetooth®-wireless-protocol unaware host and a Bluetooth®-wireless-protocol enabled remote device, the controller provides a seamless, transport-agnostic mechanism that enlarges compatibility between various data communication devices. It should be noted at the outset that there are particular hosts that may be Bluetooth®-wireless-protocol aware but function in modes (or execute applications) in which the hosts are Bluetooth®-wireless-protocol unaware. For purposes of this disclosure, a host that is functioning in a mode that is unaware of the Bluetooth®-wireless-protocol is considered to be a Bluetooth®-wireless-protocol unaware host.

With this in mind, reference is now made in detail to the description of the embodiments as illustrated in the drawings. While several embodiments are described in connection with these drawings, there is no intent to limit the disclosure to the embodiment or embodiments disclosed herein. On the contrary, the intent is to cover all alternatives, modifications, and equivalents.

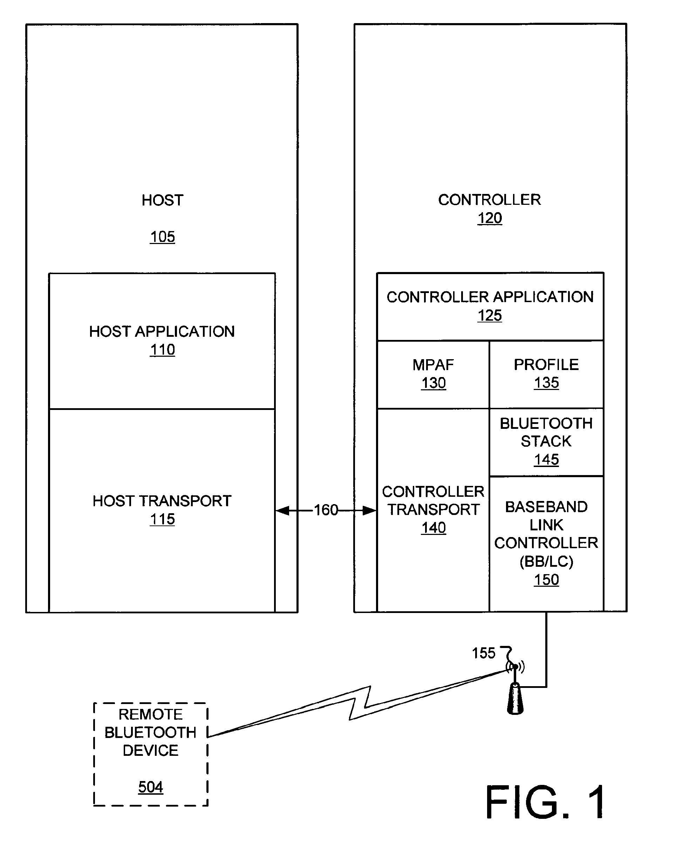

FIG. 1 is a block diagram of a system that allows communication between a Bluetooth®-wireless-protocol unaware host device 105 and a Bluetooth®-wireless-protocol enabled remote device 504. The embodiment of FIG. 1 comprises a host 105 (*e.g.*, television, heart-rate monitor, *etc*.) and a controller 120, which are communicatively coupled by a transport 160 (*e.g.*, Universal Serial Bus (USB), Universal Asynchronous Receiver/Transmitter (UART), *etc*.). The host 105 is a Bluetooth®-wireless-protocol unaware host, meaning that the host 105 is a device that is normally not capable of transmitting or receiving data using a Bluetooth® wireless protocol.

The host 105 comprises a host application 110 and a host transport 115. The host application 110 is an executable file (*e.g.*, video game, audio player, *etc*.), a data file (*e.g.*, spreadsheet, documents, *etc*.), or any other type of electronically-storable file. To the extent that the host 105 is Bluetooth®-wireless-protocol unaware, the host 105 employs the host transport 115 for data exchange. Consequently, the host transport 115 is a Universal Serial Bus (USB) transport, a Universal Asynchronous Receiver/Transmitter (UART) transport, a Serial Peripheral Interface (SPI) transport, or any other type of wired transport mechanism.

The controller 120 comprises a controller application 125, a multi-profile application framework (MPAF) 130, a profile 135, a Bluetooth® stack 145, a baseband (BB) link controller (LC), a controller transport 140, and an antenna 155. The controller 120 serves as a bridge between the Bluetooth®-wireless-protocol unaware host 105 and a Bluetooth®-wireless-protocol enabled remote device 504.

In order to accomplish the bridging function, the controller 120 employs the MPAF 130, which represents an embedded application framework to bridge the embedded controller application 125 to the host 105 through the controller transport 140. To the extent that the controller transport 140 establishes the connection with the host 105 through the host transport 115, the controller transport 140 matches the wired data-exchange mechanism of the host transport 115. Thus, if the host transport 115 is a USB transport, then the controller transport 140 is a USB transport; if the host transport 115 is a UART transport, then the controller transport 140 is a UART transport; and if the host transport 115 is a SPI transport, then the controller transport 140 is an SPI transport. In other words, the controller transport 140 matches the host transport 115, thereby allowing data exchange between the host 105 (more specifically, the host application 110) and the controller 120 (more specifically, the controller application 125).

The MPAF 130 is either an embedded software, which converts data from the Bluetooth®-wireless-protocol unaware host 105 to a Bluetooth® wireless protocol, thereby allowing the data to be transmitted to a Bluetooth®-wireless-protocol enabled remote device 504. Conversely, the MPAF 130 converts data that is received from the Bluetooth®-wireless-protocol enabled remote device 504 to a data format that is used by the host 105. As a result, the MPAF 130 enables a host-controller interface (HCI) controller to be targeted to services for Bluetooth®-wireless-protocol unaware hosts. Additionally, the MPAF 130 provides a minimal time-to-market by reducing application overhead. The MPAF 130 does this by providing a transport-agnostic interface to applications, thereby allowing seamless operation across many different transports, such as USB, UART, SPI, *etc*. Because the MPAF 130 defines multiple custom transport protocols, the MPAF 130 allows the controller 120 to concurrently support multiple, co-existing applications, which the Legacy-UHE is incapable of doing.

The profile 135 primarily provides implementation constraints, while the Bluetooth® stack 145 provides a mechanism for messaging, discovery, description, and eventing for the controller 120. As such, the Bluetooth® stack 145 allows the controller 120 to be discoverable when pairing with Bluetooth®-wireless-protocol enabled devices. Insofar as the controller 120 serves to bridge the embedded Bluetooth® controller application 125 and the Bluetooth®-wireless-protocol unaware host application 110, the controller also comprises a BB/LC 150, and an antenna 155. Upon conversion of the data to Bluetooth® wireless protocol, the controller transmits the converted data to a Bluetooth®-wireless-protocol enabled remote device 504 via the antenna 155.

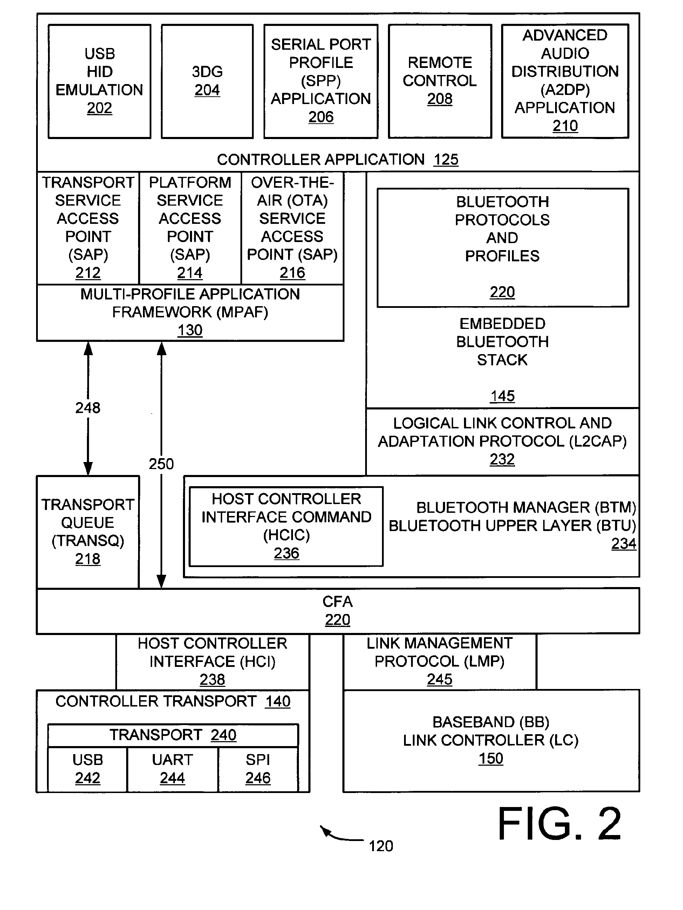

FIG. 2 is a block diagram showing, in greater detail, components of the controller 120 of FIG. 1. As shown in FIG. 2, the controller application 125 is configured to handle multiple applications, such as a USB Human Interface Device (HID) Emulation (UHE) application 202, a 3D-Glass (3DG) application 204, a Serial Port Profile (SPP) application 206, a Remote Control (RC) application 208, an Advanced Audio Distribution Profile (A2DP) application 210, *etc*. These various controller applications 125 allow for various uses, such as, for example, HID forwarding, gaming console, 3DG, remote control, USB plug-and-play (PnP), television (TV) wakeup, cable replacement applications, *etc*.

The controller application 125 is coupled to the MPAF 130 (through a transport service access point (SAP) 212, a platform SAP 214, and an over-the-air (OTA) SAP 216) as well as to the Bluetooth® stack 145. The transport SAP 212 provides an interface for sending and receiving data over a selected transport. The platform SAP 214 provides an interface for accessing platform-specific functionalities, such as, for example, timers, thread services, inputs/outputs, *etc*. The OTA SAP 216 provides an interface for accessing the Bluetooth® stack 145 services related to connection management.

The Bluetooth® stack 145 comprises various Bluetooth® protocols and profiles 220 (*e.g.*, Human Interface Device Host (HIDH), Serial Port Profile (SPP), Human Interface Device (HID), RFCOMM, Audio-Video DatTransport (AVDT)/A2DP, and other components (not shown)) that form Bluetooth®'s layered protocol architecture. To the extent that these core protocols, cable replacement protocols, telephony control protocols, and adopted protocols are known to those having skill in the art, only a truncated discussion of the Bluetooth® stack 145 is provided herein.

The Bluetooth® stack 145 also includes a Logical Link Control and Adaptation Protocol (L2CAP) 232, which is used to multiplex multiple logical connections between devices using different higher level protocols. The L2CAP 232 further provides segmentation and reassembly of on-air packets.

Both the MPAF 130 and the Bluetooth® stack 145 are coupled to a Bluetooth® module (BTM) basic transmission unit (BTU) 234, which permits over-the-air (OTA) transmission using the Bluetooth® wireless protocol.

The data transmission components can be divided into two distinct segments. First, the Bluetooth® components, which include the Link Management Protocol (LMP) 245 and the BB/LC 150. Second, the controller transport 140 and its related components, which include a transport 240 and a Host Controller Interface (HCI) 238. To the extent that the controller 120 communicates with the host 105 (FIG. 1), the transport 240 includes a USB transport 242, a UART transport 244, an SPI transport 246, and/or any other transport 240 that matches the host transport 115. These data transmission components are operatively coupled, respectively, to the MPAF 130 and the Bluetooth® stack 145, thereby allowing the controller 120 to be a bridge between a Bluetooth®-wireless-protocol unaware host 105 (FIG. 1) and a Bluetooth®-wireless-protocol enabled remote device (not shown). To the extent that each of the independent components, such as the HIDH 222, HID 228, RFCOMM 230, SPP 224, A2DP/AVDT 226, the L2CAP 232, BTM/BTU 234, HCIC 236, HCI 238, LMP 245, and the BB/LC 150 are separately known to those having skill in the art, only a truncated discussion of those components is provided herein.

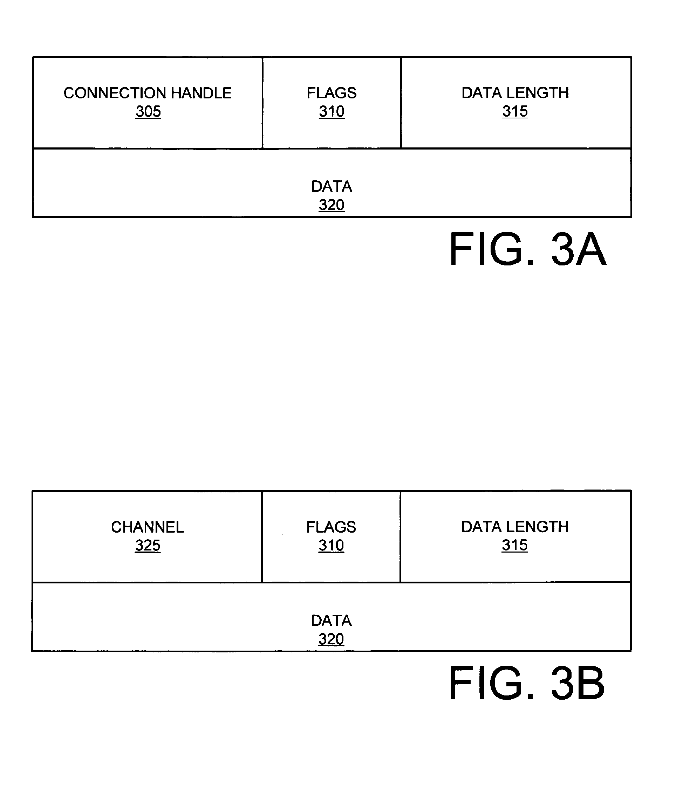

FIGS. 3A and 3B are diagrams showing example data formats for use by the controller 120 of FIG. 2. As shown in FIGS. 3A and 3B, the header structure is designed to be overlaid on a standard Host Controller Interface (HCI) Asynchronous Connection Less (ACL) data format. Thus, the framework design of FIG. 3B supports changes in the format by way of installing transport adapters. To compare, the HCI-ACL format is shown in FIG. 3A, while a custom transport format for interfacing with the host 105 (FIG. 1) is shown in FIG. 3B.

As shown in FIG. 3A, the standard HCI-ACL format comprises a connection handle 305, followed by flags 310, a data length 315, and then data 320. Comparatively, the custom data format of FIG. 3B comprises channel bits 325, followed by flags 310, the data length 310, and then data 320.

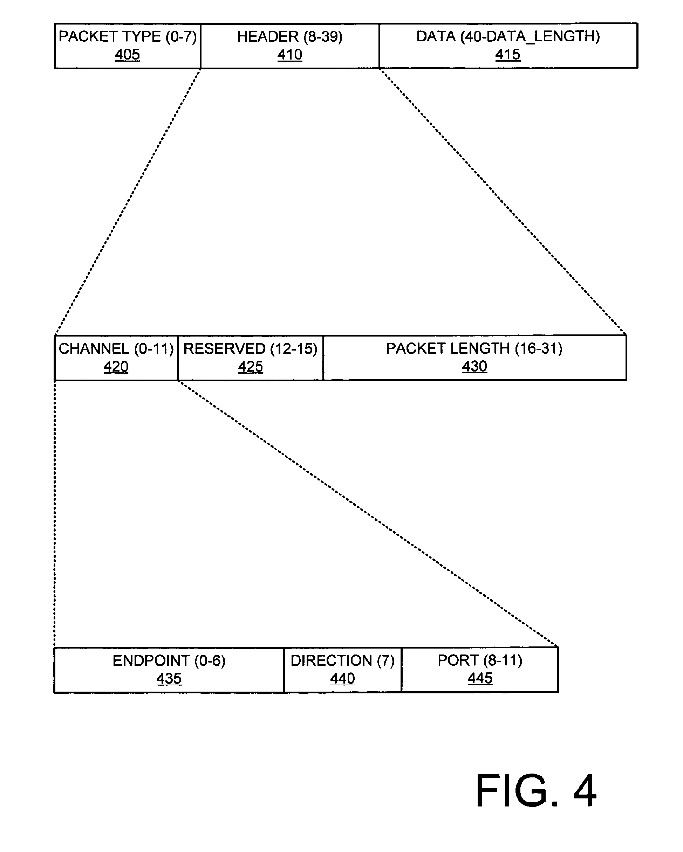

FIG. 4 is a diagram showing a specific non-limiting example of a data header format for use by the controller 120 of FIG. 2. As shown in FIG. 4, the data format begins with a packet type 405, followed by a header 410, and then followed by data 415. In the embodiment of FIG. 4, the packet type 405 is 8-bits wide (bits 0-7), with a default value of 10(0x0A). The packet type 405 identifies the MPAF mode and is configurable to avoid any future conflicts.

The header 410 is 32-bits wide (bits 8-39), and comprises a channel 420 (12-bits wide; bits 0-11), reserved bits 425 (4-bits wide; bits 12-15); and a packet length 430 (16-bits wide; bits 16-31). The channel 420 can further be divided into an endpoint 435 (7-bits wide; bits 0-6), a direction bit 440 (1-bit wide; bit 7), and a port 445 (4-bits wide; bits 8-11). In some embodiments, a zero (0) value for the endpoint 435 represents a control channel on a given port. Preferably, the default control channel is used for any custom transport-specific configuration that is based on host requirements.

In some embodiments, a zero (0) value in the direction bit 440 indicates outbound data (from the host 105 to the controller 120), while a one (1) value in the direction bit 440 indicates inbound data (from the controller 120 to the host 105). The four (4) bit port can be configured with the following associations: zero (0) for a virtual Bluetooth® port; one (1) for a virtual keyboard port; two (2) for a virtual mouse port; and three (3) for an auxiliary port.

By way of example, a control request packet sent from the host 105 to the controller 120 can be configured so that an 8-bit control class code is defined immediately after the control packet length 430. In that class code, the 8-bit class code represents the control class type, with: zero (0) being an MPAF control class; one (1) being a USB control class, where the packets are formed in USB control request format; and 2-255 can be used for future class types.

Given the examples shown in FIGS. 3A, 3B, and 4, those having skill in the art will be able to readily modify the data formats to accommodate varying transport mechanisms. Thus, further examples of data formats are omitted.

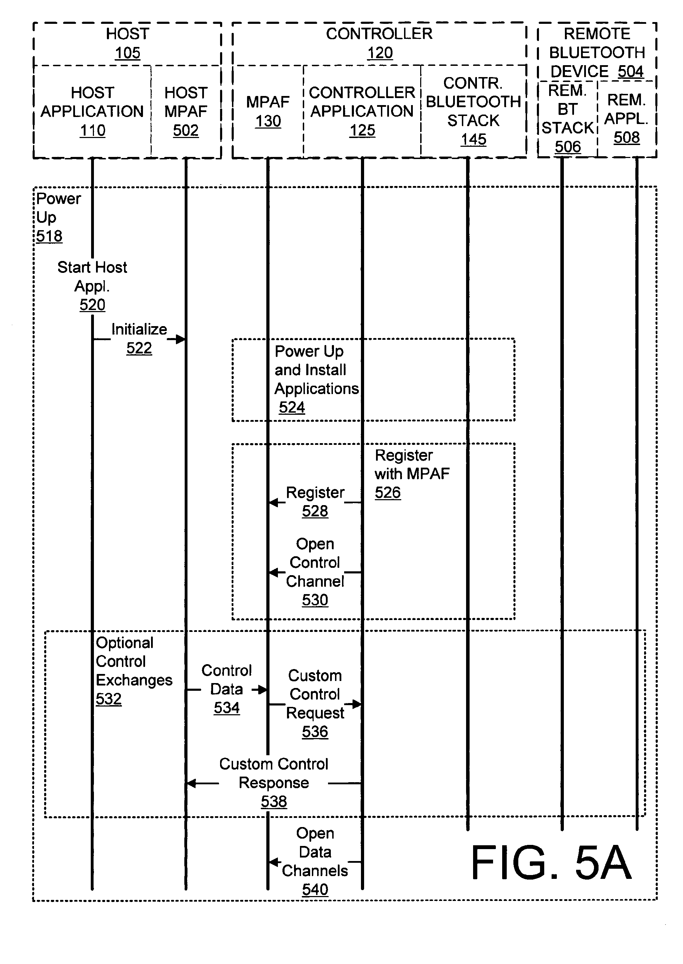

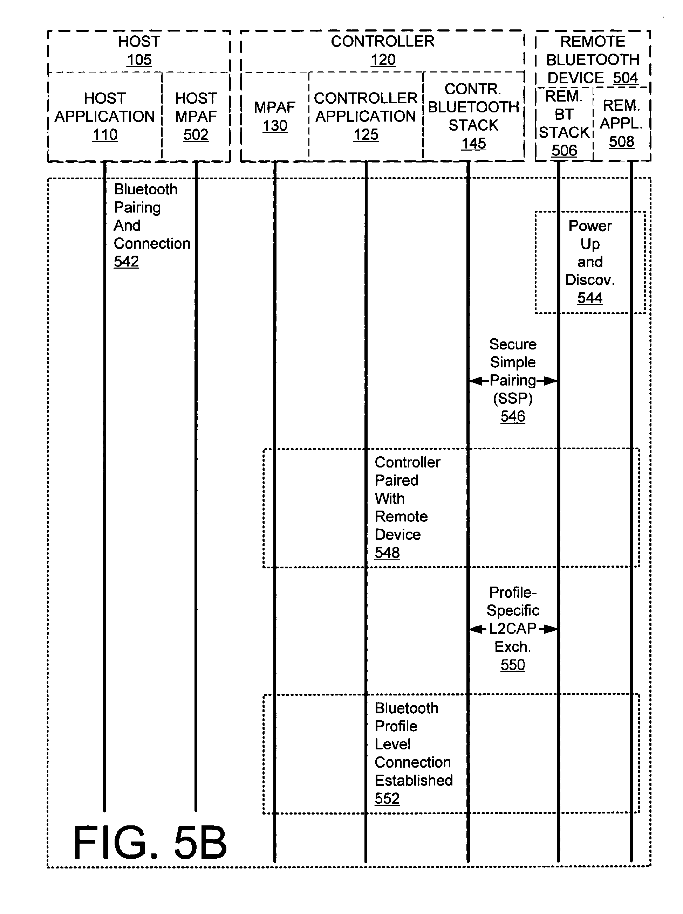

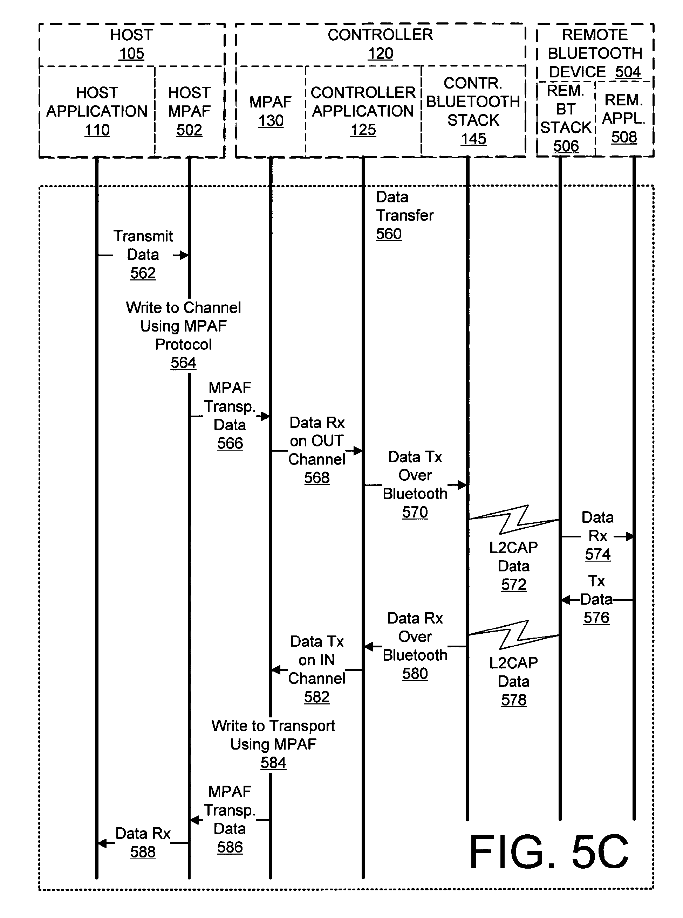

FIGS. 5A through 5C are data flow diagrams showing communication between the Bluetooth®-wireless-protocol unaware host 105, the controller 120, and the Bluetooth®-wireless-protocol enabled remote device 504. Specifically FIG. 5A shows a power-up process 518; FIG. 5B shows a Bluetooth® pairing and connection process 542; and FIG. 5C shows a data transfer process 560.

For simplicity, only the host application 110 and a host MPAF 502 (i.e., the host transport components that are MPAF adapted) are shown for the Bluetooth®-wireless-protocol unaware host 105. Similarly, only the controller MPAF 130, controller application 125, and the controller Bluetooth® stack 145 are shown for the controller 120. Likewise, only a remote Bluetooth® stack 506 and a remote application 508 are shown for the Bluetooth®-wireless-protocol enabled remote device 504.

As shown in FIG. 5A, the power-up process 518 begins when the host application starts 520 and initializes 522 to the host MPAF 502. The controller 120 then powers up and installs its applications 524. The controller 120 then registers 526 the controller MPAF 130, which comprises registering 528 the controller application 125 with the controller MPAF 130, and then opening 530 a control channel between the controller application 125 and the MPAF 130.

Thereafter, the host 105 and the controller 120 optionally engage in control exchanges 532. In these control exchanges 532, the host MPAF 502 transmits 534 control data to the controller MPAF 130. The controller MPAF 130 then sends 536 a custom control request to the controller application 125. The controller application 125 subsequently conveys 538 a custom control response to the host MPAF 502.

Once the optional control exchanges 532 are completed, the controller application 125 opens 540 data channels to the controller MPAF 130. Thus, when the process of FIG. 5A is completed, the host 105 and the controller 120 are now able to exchange data over their respective transports 115, 140, 160 (FIG. 1).

FIG. 5B shows a Bluetooth® pairing and connection process 542 between the controller 120 and the Bluetooth®-wireless-protocol enabled remote device 504. As shown in FIG. 5B, the Bluetooth®-wireless-protocol enabled remote device 504 powers up and becomes discoverable 544. The remote Bluetooth® stack 506 and the controller Bluetooth® stack 145 engage in Secure Simple Pairing (SSP) procedure 546. Insofar as those having skill in the art are familiar with the SSP procedure 546, further discussion of the SSP procedure 546 is omitted here. Once the SSP procedure 546 is completed, the controller 120 is now paired 548 with the Bluetooth®-wireless-protocol enabled remote device 504.

The controller Bluetooth® stack 145 and the remote Bluetooth® stack 506 then engage in profile-specific L2CAP exchanges 550, which results in the establishment 552 of Bluetooth® profile-level connection between the controller 120 and the Bluetooth®-wireless-protocol enabled remote device 504. At this point, the controller 120 is now paired with the Bluetooth®-wireless-protocol enabled remote device 504, and the controller 120 is also capable of data exchange with the Bluetooth®-wireless-protocol unaware host 105. Thus, a bridge is established between the Bluetooth®-wireless-protocol unaware host 105 is now ready to transfer 560 data to and from the Bluetooth®-wireless-protocol enabled remote device 504.

Proceeding to FIG. 5C, the process now begins with the Bluetooth®-wireless-protocol unaware host 105 being ready to transfer 560 data to and from the Bluetooth®-wireless-protocol enabled remote device 504 via the controller 120. The data transfer process 560 begins with the host application 110 transmitting 562 data to the host MPAF 502. The host MPAF 502 writes 562 to a channel using an MPAF protocol. The host MPAF 502 then transports 566 the data to the controller MPAF 130. The controller application 125 then receives 568 the data from the controller MPAF 130 on the controller's OUT channel. Thereafter, the controller application 125 transmits 570 the data to the controller Bluetooth® stack 145 using the Bluetooth® wireless protocol. The controller Bluetooth® stack 145 transmits 572 the data to the remote Bluetooth® stack 506 using L2CAP. That data is then received 574 at the remote application 508.

A reverse-path between the Bluetooth®-wireless-protocol enabled remote device 504 and the Bluetooth®-wireless-protocol unaware host 105 is also shown in FIG. 5C. In the reverse path, the remote application 508 transmits 576 data to the remote Bluetooth® stack 506. The remote Bluetooth® stack 506 then conveys 578 that data to the controller Bluetooth® stack 145 using L2CAP. That data is then received 580 by the controller application 125 using the Bluetooth® wireless protocol. And, the controller application 125 transmits 582 the data to the controller MPAF 130 on the IN channel of the controller 120. The controller MPAF 130 then writes 584 the data to the controller transport 140 (FIG. 1), which now enables the controller 120 to convey that data to the Bluetooth®-wireless-protocol unaware host 105. Once the data is written 584 to the controller transport, the controller MPAF 130 transports 586 the data to the host MPAF 502. Finally, the host application 110 receives 588 the data from the host MPAF 502, thereby completing the reverse-path data transmission.

As one can see, by providing a bridge between a Bluetooth®-wireless-protocol unaware host and a Bluetooth®-wireless-protocol enabled remote device, the controller provides a seamless, transport-agnostic mechanism that enlarges compatibility between various data communication devices. Thus, the MPAF 130 provides greater interoperability than the Legacy-UHE and allows for concurrent support of multiple, co-existing applications, which is not implementable by the Legacy-UHE.

The UHE application 202, 3DG application 204, SPP application 206, RC application 208, the A2DP application 210, and the other components in the controller 120 may be implemented in hardware, software, firmware, or a combination thereof. In the preferred embodiment(s), the UHE application 202, 3DG application 204, SPP application 206, RC application 208, the A2DP application 210, and the other components of the controller 120 are implemented in hardware using any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), *etc*. In an alternative embodiment, the UHE application 202, 3DG application 204, SPP application 206, RC application 208, the A2DP application 210, and the other components of the controller 120 are implemented in software or firmware that is stored in a memory and that is executed by a suitable instruction execution system.

Any process descriptions or blocks in flow charts should be understood as representing modules, segments, or portions of code which include one or more executable instructions for implementing specific logical functions or steps in the process, and alternate implementations are included within the scope of the preferred embodiment of the present disclosure in which functions may be executed out of order from that shown or discussed, including substantially concurrently or in reverse order, depending on the functionality involved, as would be understood by those reasonably skilled in the art of the present disclosure.

Although exemplary embodiments have been shown and described, it will be clear to those of ordinary skill in the art that a number of changes, modifications, or alterations to the disclosure as described may be made. For example, while specific host applications are described herein, it will be apparent to those having skill in the art that the controller can be configured with other applications to enable greater compatibility between Bluetooth®-wireless-protocol unaware hosts and Bluetooth®-wireless-protocol enabled remote devices. Furthermore, while FIGS. 5A through 5C show the host 105 as having a host MPAF 502, it should be appreciated that the host MPAF 502 is a shorthand notation for the transport components that are adapted to transmit and receive data with the controller MPAF 130. Moreover, while specific data formats are provided, and specific bit-values are shown, with reference to FIG. 4, it should be appreciated by those having skill in the art that these numbers and values are illustrative only, and not intended to be limiting to the invention. Furthermore, while an SSP procedure is shown for pairing of Bluetooth®-enabled device, it should be appreciated that other pairing procedures for Bluetooth®-enabled devices can readily be substituted for the SSP procedure without departing from the scope of the disclosure. Thus, these and other such changes, modifications, and alterations should therefore be seen as within the scope of the disclosure.

## Claims

1. A data communication system, comprising:
a Bluetooth®-wireless-protocol unaware host, comprising:
a host application; and
a host transport to communicate data, the host data being communicated in a non-Bluetooth® wireless protocol; and
a host controller interface (HCI) controller (HCIC), the HCIC comprising:
a controller transport communicatively coupled to the host transport, the controller transport matching the host transport;
a controller application to communicate with the host application through the controller transport;
a multi-profile application framework (MPAF) to enable exchange of the data using Bluetooth® wireless protocol; and
a Bluetooth® stack to enable communication of the data using the Bluetooth® wireless protocol.

2. The system of claim 1, wherein the host transport is a Universal Serial Bus (USB) transport.

3. The system of claim 1, wherein the host transport is a Universal Asynchronous Receiver/Transmitter (UART) transport.

4. The system of claim 1, wherein the host transport is a Serial Peripheral Interface (SPI) transport.

5. The system of claim 1, further comprising:
a Bluetooth®-wireless-protocol enabled remote device, comprising:
a remote Bluetooth® stack to enable data communication with the HCIC using the Bluetooth® wireless protocol; and
a remote application.

6. The system of claim 1, further comprising:
a Bluetooth®-wireless-protocol enabled remote device, comprising:
means for enabling data communication using the Bluetooth® wireless protocol; and
a remote application.

7. A controller, comprising:
a controller application;
a controller transport to exchange data between the controller application and a Bluetooth®-wireless-protocol unaware host device;
a multi-profile application framework (MPAF) to convert the data to Bluetooth® wireless protocol; and
a controller Bluetooth® stack to exchange data between the controller and a Bluetooth®-wireless-protocol enabled remote device.

8. The controller of claim 7, wherein the controller transport comprises:
a Universal Serial Bus (USB) transport;
a Universal Asynchronous Receiver/Transmitter (UART) transport; and
a Serial Peripheral Interface (SPI) transport.

9. The controller of claim 7, wherein the Bluetooth® stack employs:
RFCOMM protocols;
Audio/Video Data Transport (AVDT) protocols; and
Logical Link Control and Adaptation Protocol (L2CAP).

10. The controller of claim 7, wherein the controller transport is a Universal Serial Bus (USB) transport.

11. The controller of claim 7, wherein the controller transport is a Universal Asynchronous Receiver/Transmitter (UART) transport.

12. The controller of claim 7, wherein the controller transport is a Serial Peripheral Interface (SPI) transport.

13. The controller of claim 7, wherein the controller application comprises:
a Universal Serial Bus (USB) Human Interface Device (HID) Emulation (UHE) application;
a 3DG application;
a Serial Port Profile (SPP) application;
a Remote Control (RC) application; and
an Advanced Audio Distribution (A2DP) application.

14. The controller of claim 7, wherein the Bluetooth® stack employs RFCOMM protocols.

15. A communication method, comprising:
receiving data from a Bluetooth®-wireless-protocol unaware host;
converting the received data to a Bluetooth® wireless protocol; and
transmitting the converted data to a Bluetooth®-wireless-protocol enabled remote device.
